(19) Europäisches Patentamt / European Patent Office / Office européen des brevets

(11) **EP 2 015 098 A2**

(12) **DEMANDE DE BREVET EUROPEEN**

(43) Date de publication:
**14.01.2009 Bulletin 2009/03**

(51) Int Cl.:
***G01S 1/04*** *(2006.01)*

(21) Numéro de dépôt: **08160037.1**

(22) Date de dépôt: **09.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **09.07.2007 FR 0756336**

(71) Demandeur: **Sagem Défense Sécurité
75015 Paris (FR)**

(72) Inventeur: **LEBRAT, Jean-Philippe
75015, PARIS (FR)**

(74) Mandataire: **Callon de Lamarck, Jean-Robert et al
Cabinet Regimbeau
20 rue de Chazelles
75847 Paris cedex 17 (FR)**

(54) **Procédé de determination d'une erreur d'asservissement dans une boucle de poursuite d'un code pseudo-aléatoire**

(57) L'invention concerne un procédé de détermination d'une erreur d'asservissement dans une boucle de poursuite d'un code pseudo-aléatoire modulant un signal émis depuis un satellite et reçu par un récepteur de positionnement par satellites, le procédé comprenant une étape au cours de laquelle on détermine un signal représentatif d'une énergie de corrélation entre le signal reçu et un signal de réplique, caractérisé en ce qu'il comprend en outre une étape au cours de laquelle on recherche un décalage entre le signal déterminé et un signal centré sur la position d'asservissement courante, ledit signal centré étant représentatif d'une énergie d'autocorrélation d'un code pseudo-aléatoire, ledit décalage ainsi recherché correspondant à l'erreur de poursuite du code.

FIG.4

EP 2 015 098 A2

**Description**

La présente invention est relative à l'amélioration des performances des boucles d'asservissement mises en oeuvre dans un récepteur de positionnement par satellites pour la poursuite des codes des signaux émis par les satellites GNSS (en anglais, « *Global Navigation Satellite System* »).

L'invention trouve notamment application dans les systèmes de positionnement par satellites GNSS notamment ceux du type GPS (en anglais, « *Global Positionning System* »), GLONASS (système russe), SBAS (complément international d'intégrité) et Galiléo (système européen).

ETAT DE LA TECHNIQUE

Un récepteur de positionnement par satellites utilise les signaux émis par une pluralité de satellites en orbite autour de la terre.

C'est au travers d'une pluralité de canaux, chacun étant associé à un signal d'un satellite, que la poursuite d'un satellite (poursuite d'un signal d'un satellite) est réalisée.

Chacun des satellites émet sur une ou plusieurs fréquences données un signal (porteuse sinusoïdale) modulé en phase par la combinaison d'un code d'étalement, binaire pseudo-aléatoire, et d'un message de navigation contenant entre autres les éphémérides des satellites (c'est-à-dire les éléments définissant leur orbite et leurs variations en fonction du temps).

Le positionnement par satellites consiste à mesurer la durée de propagation du signal émis par les satellites jusqu'à son arrivée à l'antenne du récepteur de positionnement par satellites.

Ces durées de propagation multipliées par la vitesse de transmission du signal donnent les distances satellite-récepteur.

Plus précisément, le code du signal est synchronisé sur l'horloge du système de satellites, et les canaux mesurent la date de réception du signal (plus connues par l'homme du métier sous le nom de « pseudo-distances »).

Celles-ci, associées aux positions des satellites calculées grâce aux éphémérides, permettent de calculer la position du récepteur et le décalage de son horloge par rapport à celle du système des satellites.

Dans la suite du présent texte, on se place dans le contexte de la réception de signaux par le système GPS pour la transmission des signaux civils utilisant un codage d'étalement binaire pseudo-aléatoire, dit C/A, et des signaux militaires utilisant un autre codage d'étalement binaire pseudo-aléatoire, dit P(Y).

Le principe de calcul de la distance satellite-récepteur consiste en ce que le récepteur acquiert puis poursuit le signal reçu.

Pour cela, chaque canal élabore une réplique locale du signal du satellite qui lui est assigné (en termes de porteuse et de code), et corrèle le signal reçu avec sa réplique.

Le récepteur fonctionne d'abord en acquisition (boucle ouverte) pour rechercher le signal reçu en testant les hypothèses probables, en termes de Doppler et de synchronisation sur le code du signal reçu. Une fois le signal acquis, le récepteur fonctionne en poursuite (boucle fermée) pour la poursuite du signal reçu.

Les générations des répliques locales de la porteuse et du code d'un canal sont asservies par deux boucles de poursuite distinctes.

La boucle de porteuse a pour objectif d'asservir sa réplique locale sur le signal reçu en termes de Doppler de la fréquence porteuse reçue. Il s'agit généralement d'une boucle à verrouillage de phase (en anglais « *Phase Lock Loop* » (PLL)).

L'application du Doppler ainsi identifié à la réplique locale du code assure la majeure partie du maintien de sa synchronisation sur le code reçu.

La boucle de code a pour objectif d'asservir sa réplique locale de code sur le signal reçu en termes d'incohérence code-porteuse (exemple : le délai de traversée de la ionosphère dépend de la fréquence du signal, or les fréquences code et porteuse émises sont très différentes).

Telle que connue, une boucle de poursuite du code comprend trois corrélateurs, permettant de déterminer le décalage entre le signal de réplique du code et le signal reçu.

Un premier corrélateur alimenté par une réplique ponctuelle du code (corrélateur dit *« Prompt »),* un deuxième corrélateur alimenté par une réplique décalée en avance de la réplique ponctuelle (corrélateur dit *« Early »*) et un troisième corrélateur alimenté par une réplique décalée en retard de la réplique ponctuelle (corrélateur dit « *Late* »).

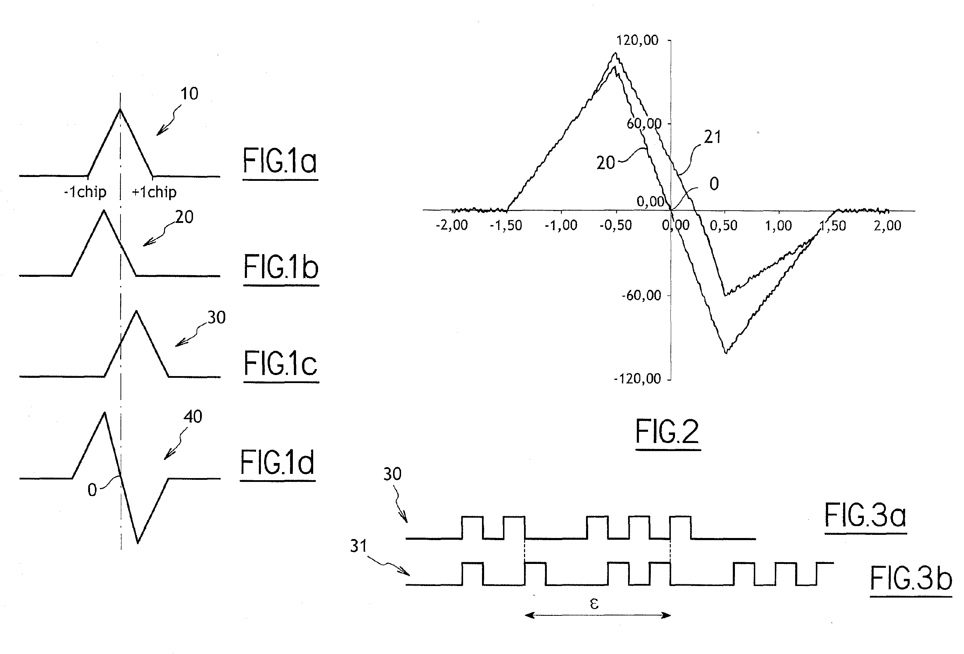

Les figures 1a, 1b et 1c illustrent respectivement les résultats issus du corrélateur « *Prompt »,* du corrélateur « *Early »* et du corrélateur *« Late ».*

La figure 1d représente la fonction *«Early»* moins *«Late»* (différence entre les résultats issus des corrélateurs « *Early »* et « *Late* »). Cette fonction est connue sous le nom de fonction d'erreur, ou encore sous le nom de discriminant de la boucle de code.

La boucle de poursuite du code maintient en permanence le corrélateur *«Prompt»* sur le pic de corrélation (voir figure 1a) en asservissant la génération de la réplique du code sur le « zéro » de la fonction caractéristique « *Early* » moins « *Late* ». Ce « zéro » correspond au sommet de la corrélation « *Prompt* » (voir figure 1 a).

Différentes sources d'erreur peuvent dégrader la précision de la mesure fournie par la boucle de poursuite du code et affecter la mesure des pseudo-distances et par conséquent le calcul de position du récepteur.

Ces erreurs proviennent notamment des trajets multiples. En effet, lorsque le signal émis par le satellite est réfléchi avant d'atteindre le récepteur, le résultat de la corrélation des signaux indirects vient s'ajouter au résultat de la corrélation avec le signal du trajet direct.

La figure 2 illustre deux fonctions d'erreur de la boucle de poursuite du code. La courbe 20 correspond à la fonction d'erreur correspondant à la corrélation du code du signal du trajet direct reçu avec un signal de réplique du code. Cette courbe n'est pas affectée par un trajet multiple.

La courbe 21 correspond à la fonction d'erreur correspondant à la corrélation du signal de réplique avec un signal reçu composé du signal direct et d'un signal réfléchi issu du même émetteur.

En particulier, la courbe 21 a été calée de manière à être alignée sur la courbe 20 en termes de position du pic de corrélation du signal direct.

Toutefois, il est à remarquer que la courbe 21 ne passe pas par le « zéro » de la courbe 20 ce qui entraîne une dégradation de la mesure fournie par la boucle de poursuite du code, et par conséquent sur le calcul des pseudos distances.

Pour pallier à cet inconvénient des solutions ont été proposées qui sont fondées sur la corrélation étroite ou la double corrélation.

Toutefois ces solutions ne sont pas satisfaisantes.

En particulier, lorsque les trajets multiples présentent des longueurs proches du trajet direct (exemple : rebonds sur la structure du porteur) ou des énergies élevées : dans ces cas le décalage du « zéro » du discriminant dû au multi-trajets reste trop important pour des applications à forte exigence d'intégrité. Par ailleurs ces solutions induisent un changement de signe assez fréquent de l'erreur de pseudo-distance due au trajet multiple, ce qui n'est pas compatible avec l'hypothèse de mesures à bruit gaussien nécessaire à un filtrage de type Kalman.

La solution de lissage des mesures de code par les mesures de porteuse conduit à une auto-corrélation des mesures de code qui elle aussi nuit significativement à l'efficacité d'un filtrage de type Kalman.

D'autres solutions sont fondées sur des faisceaux d'antennes permettant d'identifier et isoler les trajets multiples. Ces solutions nécessitent un complément matériel et logiciel significatif (antennes supplémentaires, traitement des informations).

PRESENTATION DE L'INVENTION

Un but de l'invention est d'améliorer les performances de la boucle de poursuite d'un code d'un satellite par les récepteurs GPS.

L'invention permet de déterminer une erreur de poursuite d'un code pseudo-aléatoire modulant un signal émis depuis un satellite et reçu par un récepteur de positionnement par satellites.

A cet effet, l'invention propose un procédé permettant de remplacer le discriminant standard (voir figure 1d) utilisé dans des boucles de poursuite du code d'un satellite.

L'invention permet, notamment, de déterminer l'erreur de poursuite dans une boucle de poursuite du code d'un satellite en se fondant sur l'analyse d'une énergie de corrélation entre le signal reçu et un signal de réplique.

Ainsi, selon un premier aspect, l'invention concerne un procédé de détermination d'une erreur d'asservissement dans une boucle de poursuite d'un code pseudo-aléatoire modulant un signal émis depuis un satellite et reçu par un récepteur de positionnement par satellites, le procédé comprenant une étape au cours de laquelle on détermine un signal représentatif d'une énergie de corrélation entre le signal reçu et un signal de réplique.

Le procédé de l'invention est caractérisé en ce qu'il comprend en outre une étape au cours de laquelle on recherche un décalage entre le signal déterminé et un signal centré sur la position d'asservissement courante, le signal centrée étant représentatif d'une énergie d'autocorrélation d'un code pseudo-aléatoire, ledit décalage ainsi recherché correspondant à l'erreur de poursuite du code.

Au cours du procédé de l'invention, la recherche du décalage entre le signal centré et le signal déterminé consiste en outre à décaler d'une durée de décalage le signal déterminé.

De manière plus précise le décalage recherché entre le signal centré et le signal déterminé correspond à la durée du décalage du signal déterminé qui produit le signal déterminé le plus proche du signal centré.

Selon un premier un mode de réalisation la recherche du décalage entre le signal déterminé et le signal centré comprend le calcul, pour chaque durée du décalage du signal déterminé, de la somme quadratique des écarts entre le signal centré et le signal déterminé. Le décalage recherché est le décalage du signal déterminé pour lequel la somme quadratique des écarts calculée est minimale.

Selon un deuxième mode de réalisation la recherche du décalage entre le signal déterminé et le signal centré consiste à détecter le maximum du signal déterminé. La détection du maximum du signal déterminé consiste à calculer pour chaque durée du décalage du signal déterminé l'énergie du signal déterminé, le décalage recherché étant le décalage du signal déterminé produisant l'énergie du signal déterminé maximale.

Selon un troisième mode de réalisation la recherche du décalage entre le signal déterminé et le signal centré consiste à détecter une rupture de pente du signal déterminé. La détection de la rupture de pente consiste à calculer la différence d'énergie entre deux signaux déterminés successivement décalés.

Selon un quatrième mode de réalisation la recherche du décalage entre le signal déterminé et le signal centré comprend le calcul, pour chaque durée du décalage du signal déterminé, du produit de corrélation entre le signal centré et le signal déterminé ainsi décalé. Le décalage recherché est le décalage du signal déterminé pour lequel le produit de corrélation calculé est maximal.

Selon un cinquième mode de réalisation la recherche du décalage entre le signal déterminé et le signal centré consiste à calculer, pour chaque durée du décalage du signal déterminé la pente dudit signal déterminé. Le décalage recherché est le décalage du signal déterminé pour lequel la valeur de la pente est maximale.

La recherche du décalage est limitée pour chacun des modes de réalisations à la partie ascendante du signal qui elle n'est pas affectée par les trajets multiples.

Le procédé de l'invention offre l'avantage d'être notamment plus robuste aux trajets multiples que le discriminant « standard » de la boucle de poursuite d'un code d'un satellite.

Selon un second aspect, l'invention concerne un récepteur de positionnement par satellites disposant de moyens pour mettre en oeuvre le procédé selon le premier aspect de l'invention.

## PRESENTATION DES FIGURES

D'autres caractéristiques et avantages de l'invention ressortiront encore de la description qui suit, laquelle est purement illustrative et non limitative et doit être lue en regard des dessins annexés sur lesquels, outre les figures 1 a, 1 b, 1 c, 1 d et 2 déjà discutées :

- les figures 3a et 3b illustrent respectivement un code binaire pseudo-aléatoire en fonction de $t/T_c$ reçu d'un satellite (figure 3a) et sa réplique (figure 3b) générée localement au niveau du récepteur ;
- la figure 4 illustre les courbes de corrélation du signal idéal (c'est-à-dire du signal centré représentatif d'une énergie d'autocorrélation d'un signal modulé par un code pseudo-aléatoire) et du signal déterminé (c'est-à-dire l'énergie de corrélation entre deux signaux modulés par un code pseudo-aléatoire décalés entre eux), en fonction du décalage entre les signaux corrélés, décalage normalisé par rapport à la durée d'un chip de code ;
- la figure 5 illustre un schéma synoptique des différentes étapes du procédé de l'invention.

## DESCRIPTION DE PLUSIEURS MODES DE REALISATION

Les figue 3a et 3b illustrent respectivement un code binaire pseudo-aléatoire, à valeurs dans {-1, +1}, en fonction de $t/T_c$ (normalisé par la valeur d'un chip de code notée $T_c$) reçu d'un satellite (voir figure 3a) et sa réplique (voir figure 3b) générée localement au niveau du récepteur. Ces deux signaux sont décalés de l'erreur $\varepsilon$ de poursuite du code

Il est à noter que lorsque la boucle de poursuite du code de satellite est correctement asservie, on connaît le signal représentatif de l'énergie de corrélation du signal reçu avec un signal de réplique. Il s'agit en particulier d'une fonction d'autocorrélation d'un signal de code.

Une telle autocorrélation correspond à un signal centré qui est obtenu en calculant l'énergie de la fonction d'autocorrélation du code pseudo-aléatoire sur la durée [-1, +1].

Telle que connue, une telle fonction est centrée et symétrique et comprend une partie ascendante pour $t/T_c \in$ [-1,0] et une partie descendante pour $t/T_c \in$ [0, +1].

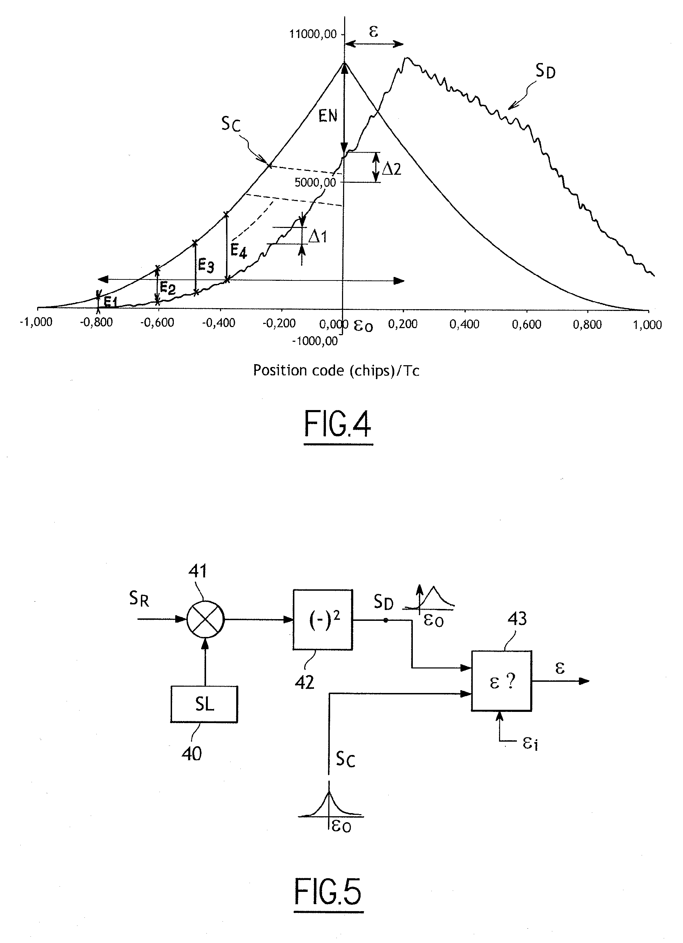

La figure 4 illustre le signal centré $S_C$ représentatif d'une énergie d'autocorrélation d'un signal modulé par un code pseudo-aléatoire en fonction du décalage de la corrélation, décalage normalisé par rapport à la durée $T_C$ d'un chip de code,

On a représenté ici le signal centré $S_C$ centré sur zéro qui correspond à la position d'asservissement courante $\varepsilon_0$ de la boucle de poursuite du code.

La figure 5 est un schéma synoptique illustrant les étapes génériques du procédé de détermination de l'erreur de poursuite d'un code pseudo-aléatoire, ou discriminant.

Au cours du procédé, comme on l'aura compris, on génère un signal de réplique $S_L$. Un tel signal est généré au moyen d'un générateur de signal de réplique 40 d'un récepteur de positionnement par satellites.

On détermine ensuite une corrélation 41 entre le signal reçu $S_R$ et le signal de réplique $S_L$.

A l'issue de cette corrélation 41, on détermine son énergie 42 en calculant la fonction de corrélation au carré.

On obtient alors un signal représentatif d'une énergie de corrélation entre le signal reçu $S_R$ et le signal de réplique $S_L$, c'est-à-dire le signal déterminé $S_D$.

Le signal reçu $S_R$ peut être affecté par un trajet multiple se traduisant par une dégradation du signal déterminé $S_D$.

Le signal reçu, affecté par un trajet multiple, varie et le signal de réplique $S_L$ ne suit pas cette variation, la corrélation avec celui-ci s'en trouve déformée.

Sur la figure 4, un signal déterminé $S_D$ affecté par un trajet multiple (sa partie descendante présente notamment une déformation) est représenté.

Le signal déterminé $S_D$ est par ailleurs décalé, d'une durée notée $\varepsilon$, par rapport au signal centré $S_c$ ; cette durée représente l'erreur de poursuite à résorber et donc que l'on souhaite déterminer.

Un tel décalage est dû au fait que le signal de réplique $S_L$ ne suit pas la variation du signal reçu (en termes d'incohérence code-porteuse).

En particulier, le signal de réplique n'est plus exactement synchronisé avec le signal reçu. En d'autres termes cela pourrait se traduire par le fait la génération de la réplique du code ne coïnciderait plus avec le « zéro » de la fonction caractéristique « *Early* » moins « *Late* », par analogie avec la technique telle que connue.

Ce décalage $\varepsilon$ représente l'erreur de poursuite du code, puisque comme déjà mentionné, lorsque la poursuite s'opère sans erreurs, le signal représentatif de l'énergie de corrélation est centré sur la position d'asservissement courante $\varepsilon_0$.

Afin de recaler le signal de réplique il convient de déterminer le décalage $\varepsilon$.

Ainsi, le procédé comprend en outre une étape au cours de laquelle on recherche un décalage $\varepsilon$ entre le signal déterminé $S_D$ et un signal centré $S_C$, représentatif d'une énergie d'autocorrélation d'un signal pseudo-aléatoire.

Le décalage $\varepsilon$ ainsi recherché correspond à l'erreur $\varepsilon$ de poursuite du code et permet de recaler le signal de réplique pour que la poursuite s'opère sans erreurs.

De manière plus précise, la recherche du décalage $\varepsilon$ comprend une première étape de calcul du signal déterminé $S_D$.

Le signal déterminé peut être obtenu au moyen d'un signal de réplique $S_L$ glissant autour de la position d'asservissement courante, c'est-à-dire celle estimée au cycle d'asservissement précédent, ou par plusieurs signaux de réplique $S_R$ calés et resserrés autour de cette même position d'asservissement (procédé avantageux), ou par une combinaison des deux moyens.

L'espacement entre les signaux de réplique et/ou la vitesse de balayage déterminent la résolution (précision) de l'asservissement.

Par une seconde étape, le signal déterminé $S_D$ ainsi calculé est décalé d'une durée de décalage $\varepsilon_i$ autour du signal centré $S_C$.

Le décalage $\varepsilon$ recherché correspond à la durée du décalage ($\varepsilon_i$) qui produit le signal déterminé $S_D$ le plus proche du signal centré $S_C$.

En d'autres termes, il s'agit de déterminer la proximité entre le signal déterminé $S_D$ et le signal centré $S_C$ en testant divers décalages du signal déterminé $S_D$. On procède ainsi de manière itérative.

C'est la valeur du décalage horizontal (temporel) noté $\varepsilon$ entre le signal déterminé $S_D$ et le signal centré $S_C$ qui indique l'erreur d'asservissement courante de la boucle de code.

Le signal de réplique $S_L$ peut être alors décalé en conséquence et entraîne un asservissement correct sans erreurs de poursuite.

Selon un premier mode de réalisation, la proximité entre le signal déterminé $S_D$ et le signal centré $S_C$ comprend le calcul, pour chaque durée du décalage $\varepsilon_i$ du signal déterminé $S_D$, de la somme quadratique des écarts entre le signal centré $S_C$ et le signal déterminé $S_D$ décalé de $\varepsilon_i$.

Un tel calcul est limité à la partie ascendante (entre -1 et 0 sur la courbe de la figure 4) du signal centré $S_c$.

Une telle limitation permet de s'affranchir de la principale déformation de la corrélation du signal reçu par le signal de réplique, un trajet réfléchi étant par définition plus long qu'un trajet direct.

Une telle déformation est notamment visible dans la partie descendante du signal déterminé $S_D$ (voir figure 4).

La somme quadratique est calculée de la manière suivante :

$$E(\varepsilon_i) = \sum_{j=1}^{N} \left(S_C(j) - S_D(j + \varepsilon_i)\right)^2 = \int_{t=-1}^{0} \left(S_C(t) - S_D(t + \varepsilon_i)\right)^2 \, ,$$

où N correspond au nombre d'échantillons mesurés sur la durée d'un chip de code, un tel calcul étant effectué dans la partie ascendante du signal centré $S_C$ (idéal) (entre -1 et 0 sur la courbe de la figure 3).

On détermine alors la valeur minimale parmi toutes les valeurs $E(\varepsilon_i)$ ainsi obtenues. Ainsi c'est le $i^{\text{ème}}$ décalage

$\varepsilon_i$ qui donne la valeur minimale pour $E(\varepsilon_i)$ qui permet d'obtenir l'erreur $\varepsilon$ de la poursuite du code.

Dans ce mode de réalisation, il s'agit de déterminer le minimum des $E(\varepsilon_i)$ pour identifier l'erreur $\varepsilon$ de l'asservissement à résorber.

Selon un deuxième mode de réalisation, la proximité entre le signal déterminé $S_D$ et le signal centré est obtenue en détectant le maximum du signal déterminé.

Soit

$$E'(\varepsilon_i) = \sum_{j=1}^{n} \left( S_D \left( j + \varepsilon_i \right) \right)^2,$$

où n correspond au nombre de d'échantillons dont la somme couvre la résolution (au sens de la « précision ») de l'erreur d'asservissement (typiquement de 1/10 à 1/1000 chip).

Dans ce mode de réalisation, c'est le i[ème] décalage qui donne la valeur maximale de $E'(\varepsilon_i)$ qui permet d'obtenir l'erreur de la poursuite du code.

Notons que ce mode de réalisation n'est pas robuste aux signaux multi-trajets d'amplitude cumulée supérieure ou égale à celle du trajet direct.

Selon un troisième mode de réalisation, la proximité entre le signal déterminé $S_D$ et le signal centré est obtenue en détectant une rupture de pente du signal déterminé $S_D$. Il s'agit ici de calculer la variation de pente du signal déterminé $S_D$.

On identifie la position de la rupture de pente en fin d'ascension du pic de corrélation par calcul des valeurs

$$\Delta_i = E'(\varepsilon_i) - E'(\varepsilon_{i-1}),$$

si $\Delta_i < \alpha.\Delta_{i-1}$ alors c'est le décalage i-1 qui identifie l'erreur de la poursuite du code, avec $\alpha$ compris entre 0,9 et 1,1.

Ce procédé peut être amélioré en filtrant les énergies $E'(\varepsilon_i)$ par un filtre de type Butterworth passe-bas d'ordre 2, donc avant le calcul des $\Delta_i$. Le décalage i doit alors être corrigé du retard pur lié à ce filtre. La constante de temps du filtre doit être réglée pour assurer le meilleur compromis entre la tolérance au bruit de mesure et la résolution (précision) de la détermination de l'erreur d'asservissement.

Selon un quatrième mode de réalisation, la proximité entre le signal déterminé $S_D$ et le signal centré $S_C$ comprend, pour chaque durée du décalage $\varepsilon_i$ du signal déterminé $S_D$, le calcul d'un produit de corrélation entre le signal centré $S_C$ et le signal déterminé $S_D$ (notons que comme définis précédemment, les signaux $S_C$ et $S_D$ sont eux-même le résultat d'un produit de corrélation).

Un tel produit de corrélation est calculé sur la durée correspondant à partie ascendante du signal centré, c'est-à-dire sur un chip de code. D'après l'exemple de la figure 4 il s'agit de $t/T_c \in$ [-1,0].

De manière itérative, on calcule la fonction de corrélation $R(\varepsilon_i)$ suivante pour les hypothèses i faites sur le décalage $\varepsilon_i$:

$$R(\varepsilon_i) = \int_{t=-1}^{0} S_c(t) \times S_D(t + \varepsilon_i) dt .$$

C'est le i[ème] décalage $\varepsilon_i$ qui conduit au produit de corrélation maximal qui est l'erreur de poursuite $\varepsilon$ du code recherchée.

Selon un cinquième mode de réalisation, la proximité entre le signal déterminé $S_D$ et le signal centré $S_C$ est obtenue en détectant le maximum de la pente du signal déterminé $S_D$.

Dans ce mode de réalisation, c'est le i[ème] décalage qui donne la valeur maximale de la pente du signal déterminé $S_D$ qui permet d'obtenir l'erreur de la poursuite du code.

De manière préférée la pente du signal déterminé, notée $P'_i$, est calculée par régression linéaire des $E'(\varepsilon_i)$ (défini précédemment) :

$$P'_i = \frac{n \cdot \sum\limits_{j=i-n+1}^{i}\left[\varepsilon_j \cdot E'(\varepsilon_j)\right] - \sum\limits_{j=i-n+1}^{i}\varepsilon_j \cdot \sum\limits_{j=i-n+1}^{i}E'(\varepsilon_j)}{n \cdot \sum\limits_{j=i-n+1}^{i}\left(\varepsilon_j\right)^2 - \left[\sum\limits_{j=i-n+1}^{i}\varepsilon_j\right]^2} \; .$$

L'horizon de calcul de la pente, n, doit représenter entre 1/1000 et 1 chip préférentiellement 1/5 chip.

Notons que ce mode de réalisation est robuste à des signaux multi-trajets d'amplitude cumulée supérieure à celle du trajet direct.

De manière préférée, le signal déterminé $S_D$ est calculé sur une plage de $\pm$ 2 chips de code autour de la position d'asservissement courante, identifiée lors du précédent cycle.

Cette plage de mesure préférentielle peut être réduite jusqu'à $\pm$ 0,25 chip de code ou étendue à $\pm$ 3 chips de code.

De manière avantageuse, le procédé est appliqué pour une durée du signal égale à 1 chip de code, dans la partie ascendante du signal centré $S_C$. Cette durée préférentielle de 1 chip peut être réduite jusqu'à 1/100 chip de code mais doit rester dans la partie ascendante du signal $S_C$ de manière préférentielle.

En effet, la Demanderesse a constaté que de manière surprenante la partie ascendante du signal déterminé $S_D$ est peu affectée par les trajets multiples, contrairement à la partie descendante.

Ceci est clairement illustré par la figure 4, la partie ascendante comprend un « renflement » provoqué par la présence d'un trajet multiple.

Il est à noter que pour chacun des modes de réalisation ci-dessus décrits les signaux correspondants aux différentes corrélations sont obtenus au moyen d'au moins un corrélateur.

De manière préférentielle le nombre de corrélateurs c'est-à-dire le nombre de signaux de réplique $S_R$ est de 5 ; il peut être abaissé à 1 ou augmenté jusqu'à 1024.

Par ailleurs, les différents corrélateurs peuvent être espacés de 1/1024 chip de code à 10 chips de code ; avantageusement 0,5 chip de code.

Le signal déterminé est échantillonné à une fréquence comprise entre 50 Hz (limite basse liée à la fréquence de transmission du message de navigation) et 1000 Hz (fréquence recommandée, correspondant à la durée d'une époque du code C/A GPS).

Si le signal déterminé $S_D$ doit être mesuré par balayage, la vitesse de balayage de la réplique locale du code doit être comprise entre 6 et 1/600 chip par seconde. Idéalement : 1/6 chip par seconde avec 5 corrélateurs espacés de 0,5 chip.

La durée du test des hypothèses (c'est-à-dire la durée du balayage en cas de balayage ou encore la durée d'un cycle de l'asservissement) doit rester faible devant la variation de l'incohérence code-porteuse : de 1/100 à 20 secondes, idéalement 3 secondes.

Si le signal déterminé $S_D$ doit être calculé par balayage et que la largeur du balayage induit une perte inacceptable de l'amplitude du signal direct, un canal supplémentaire doit être assigné à chaque satellite pour assurer l'asservissement sur la porteuse et la démodulation des données. Le canal d'asservissement sur le code doit alors être piloté par le résultat de l'asservissement sur la porteuse opéré par l'autre canal, et inversement.

Le procédé est destiné à être mis en oeuvre dans un récepteur de positionnement par satellites et notamment dans un module de poursuite intégré dans un tel récepteur, un tel récepteur comprenant des moyens pour mettre en oeuvre le procédé ci-dessus décrit.

Les performances du récepteur GPS s'en trouvent améliorées.

La description effectuée s'est focalisée sur les récepteurs GPS mais celle-ci peut être transposée à d'autres types de récepteur tels que les récepteurs GLONASS, SBAS, Galiléo etc.

**Revendications**

1. Procédé de détermination d'une erreur ($\varepsilon$) d'asservissement dans une boucle de poursuite d'un code pseudo-aléatoire modulant un signal émis depuis un satellite et reçu par un récepteur de positionnement par satellites, le procédé comprenant une étape au cours de laquelle on détermine un signal ($S_D$) représentatif d'une énergie de corrélation entre le signal reçu ($S_R$) et un signal de réplique ($S_L$), **caractérisé en ce qu'**il comprend en outre une étape au cours de laquelle on recherche un décalage ($\varepsilon$) entre le signal déterminé ($S_D$) et un signal centré ($S_C$) sur la position d'asservissement courante ($\varepsilon_0$), ledit signal centré ($S_C$) étant représentatif d'une énergie d'autocorrélation d'un code pseudo-aléatoire, ledit décalage ($\varepsilon$) ainsi recherché correspondant à l'erreur de poursuite du code.

2. Procédé selon la revendication 1, **caractérisé en ce que** la recherche du décalage ($\varepsilon$) entre le signal centré ($S_C$) et le signal déterminé ($S_D$) consiste en outre à décaler d'une durée de décalage ($\varepsilon_i$) le signal déterminé ($S_D$).

3. Procédé selon l'une des revendications précédentes, **caractérisé en ce que** le décalage recherché ($\varepsilon$) entre le signal centré ($S_C$) et le signal déterminé ($S_D$) correspond à la durée du décalage ($\varepsilon_i$) du signal déterminé ($S_D$) qui produit le signal déterminé ($S_D$) le plus proche du signal centré ($S_C$).

4. Procédé selon l'une des revendications précédentes, **caractérisé en ce que** la recherche du décalage ($\varepsilon$) entre le signal déterminé ($S_D$) et le signal centré ($S_C$) comprend le calcul, pour chaque durée du décalage ($\varepsilon_i$) du signal déterminé ($S_D$), de la somme quadratique des écarts entre le signal centré ($S_C$) et le signal déterminé ($S_D$).

5. Procédé selon la revendication 4, **caractérisé en ce que** le décalage recherché ($\varepsilon$) est le décalage ($\varepsilon_i$) du signal déterminé ($S_D$) pour lequel la somme quadratique des écarts calculés est minimale.

6. Procédé selon l'une des revendications 1 à 3, **caractérisé en ce que** la recherche du décalage ($\varepsilon$) entre le signal déterminé ($S_D$) et le signal centré ($S_c$) comprend le calcul, pour chaque durée du décalage ($\varepsilon_i$) du signal déterminé ($S_D$), du produit de corrélation entre le signal centré ($S_c$) et le signal déterminé ($S_D$) ainsi décalé.

7. Procédé selon la revendication 6, **caractérisé en ce que** le décalage recherché ($\varepsilon$) est le décalage ($\varepsilon_i$) du signal déterminé ($S_D$) pour lequel le produit de corrélation calculé est maximal.

8. Procédé selon l'une des revendications 1 à 3, **caractérisé en ce que** la recherche du décalage entre le signal déterminé ($S_D$) et le signal centré ($S_C$) consiste à détecter le maximum du signal déterminé ($S_D$).

9. Procédé selon la revendication 8, **caractérisé en ce que** la détection du maximum du signal déterminé ($S_D$) consiste à calculer, pour chaque durée du décalage ($\varepsilon_i$) du signal déterminé ($S_D$), l'énergie du signal déterminé, le décalage recherché étant le décalage du signal déterminé produisant l'énergie du signal déterminé maximale.

10. Procédé selon l'une des revendications 1 à 3, **caractérisé en ce que** la recherche du décalage ($\varepsilon$) entre le signal déterminé ($S_D$) et le signal centré ($S_C$) consiste à détecter une rupture de pente du signal déterminé ($S_D$).

11. Procédé selon la revendication 10, **caractérisé en ce que** la détection de la rupture de pente consiste à calculer la différence d'énergie entre deux signaux déterminés successivement décalés.

12. Procédé selon l'une des revendications 1 à 3, **caractérisé en ce que** la recherche du décalage ($\varepsilon$) entre le signal déterminé ($S_D$) et le signal centré ($S_c$) consiste à calculer, pour chaque durée du décalage ($\varepsilon_i$) du signal déterminé ($S_D$) la pente dudit signal déterminé ($S_D$).

13. Procédé selon la revendication 12, **caractérisé en ce que** le décalage recherché ($\varepsilon$) est le décalage ($\varepsilon_i$) du signal déterminé ($S_D$) pour lequel la valeur de la pente ($P'_i$) est maximale.

14. Procédé selon l'une des revendications précédentes, **caractérisé en ce que** la recherche du décalage ($\varepsilon$) entre le signal déterminé ($S_D$) et le signal centré ($S_c$) est effectuée sur la partie ascendante du signal centré ($S_C$).

15. Procédé selon l'une des revendications précédentes **caractérisé en ce que** la recherche du décalage ($\varepsilon$) entre le signal déterminé ($S_D$) et le signal centré ($S_C$) est effectuée sur une durée comprise entre 1/100 et 1 chip de code.

16. Procédé selon l'une des revendications 2 à 7 ou 9 et 11, **caractérisé en ce que** les décalages ($\varepsilon_i$) du signal déterminé ($S_D$) sont compris entre $\pm$ 0,25 et $\pm$ 3 chips autour de la position d'asservissement courante ($\varepsilon_0$).

17. Procédé selon la revendication 1, **caractérisé en ce que** le signal déterminé ($S_D$) est obtenu par au moins un signal de réplique rapproché(s) et/ou par un glissement d'au moins un signal de réplique autour de la position d'asservissement courante ($\varepsilon_0$).

18. Récepteur de positionnement par satellites, **caractérisé en ce qu'**il comprend des moyens aptes à mettre en oeuvre le procédé selon l'une quelconque des revendications précédentes.

EP 2 015 098 A2

-1chip | +1chip

10

FIG.1a

20

FIG.1b

30

FIG.1c

40

0

FIG.1d

120,00

60,00

20

21

0

0,00

-2,00  -1,50  -1,00  -0,50      0,50  1,00  1,50  2,00

-60,00

-120,00

FIG.2

30

FIG.3a

31

FIG.3b

ε

## FIG.4

## FIG.5